# FASCICULE DE BREVET EUROPEEN

(11) **EP 3 601 855 B1**
(45) Date de publication et mention de la délivrance du brevet: **27.01.2021**
(21) Numéro de dépôt: 18715781.3
(22) Date de dépôt: 22.03.2018
(51) Int. Cl.: F16K 1/36, F16K 1/42, F16K 1/54, F02M 26/68

(54) **VANNE DE RÉGULATION D'UN DÉBIT DE FLUIDE**
VENTIL ZUR REGELUNG DER FLUSSRATE EINER FLÜSSIGKEIT
VALVE FOR REGULATING A FLUID FLOW RATE

(30) Priorité: 23.03.2017 FR 1752395
(43) Date de publication de la demande: 05.02.2020
(73) Titulaire: Valeo Systemes de Controle Moteur, 95800 Cergy Saint Christophe (FR)
(72) Inventeur: DE COLIGNY, Adeline, 95800 Cergy Saint Christophe (FR); AQUA, Sébastien, 95800 Cergy Saint Christophe (FR); RIBERA, Fréderic, 95800 Cergy Saint Christophe (FR)
(74) Mandataire: Garcia, Christine
(86) Numéro de dépôt international: PCT/FR2018/050695
(87) Numéro de publication internationale: WO 2018/172705

(56) Documents cités:
- FR-A1- 2 430 566
- US-A- 2 289 239

## Description

La présente invention concerne une vanne de régulation de débit de fluide, par exemple utilisable dans un circuit de recirculation de gaz d'échappement (ou circuit EGR de l'anglais « *Exhaust Gaz Recirculation* ») d'un moteur thermique de véhicule automobile.

En particulier, le domaine de la présente invention est celui des équipements pour l'alimentation du moteur, notamment les actionneurs ou vannes doseuses qui participent au fonctionnement des moteurs à combustion interne.

Une telle vanne comporte un corps de vanne comprenant un premier conduit assurant l'admission des gaz d'échappement dans la vanne et un deuxième conduit assurant la sortie des gaz de la vanne.

En outre, une telle vanne comprend généralement un clapet ou soupape monté coulissant dans un des conduits de la vanne entre une position de fermeture dans laquelle le clapet est appliqué contre un siège agencé dans le conduit et une position extrême d'ouverture dans laquelle le clapet est écarté du siège.

Le clapet est mis en mouvement au moyen d'un actionneur entre sa position de fermeture et sa position d'ouverture pour régler l'écartement ou levée du clapet par rapport à son siège et ainsi la section de passage des gaz d'échappement, la position extrême d'ouverture assurant un débit maximal des gaz d'échappement dans la vanne.

Une telle vanne est très souvent utilisée dans la plage de fonctionnement correspondant aux faibles débits, surtout pour des moteurs thermiques de type à allumage commandé. Elle nécessite par conséquent un contrôle précis du débit pour cette gamme de faibles débits.

FR 2 430 566 divulgue une vanne de régulation de débit de fluide selon le préambule de la revendication 1.

Il existe donc un besoin d'améliorer la progressivité du débit des vannes à soupape, notamment de type EGR, en particulier sur les faibles et très faibles levées de la soupape.

Ainsi, l'invention propose de fournir une vanne à soupape ayant un contrôle précis du débit du fluide notamment pour de très faibles débits.

À cet effet, la présente invention a pour objet une vanne de régulation de débit d'un fluide comportant :
- un conduit comportant une ouverture permettant un écoulement du fluide, et
- une soupape mobile en translation dans le conduit entre une position de fermeture et une position extrême d'ouverture,
dans laquelle :
- le conduit comporte une zone de contrôle du débit de fluide dont une extrémité est délimitée par la ligne de contact avec la soupape lorsqu'elle est en position de fermeture, la zone de contrôle comportant en regard de la soupape une surface de profil curviligne s'évasant à partir de la ligne de contact dans la direction de coulissement de la soupape de la position de fermeture vers la position extrême d'ouverture, et
- la soupape comporte au moins un renflement agencé en regard de la zone de contrôle du conduit lorsque la soupape est en position de fermeture. Ainsi, une telle vanne permet d'obtenir un contrôle précis du débit du fluide pour de très faibles débits correspondant à de faibles levées ou levées intermédiaires.

Grâce à la forme du siège et à la forme de la soupape de la vanne, une augmentation très progressive du débit en fonction de la levée de la soupape est obtenue.

En effet, le ou les renflements de la soupape permettent d'abaisser encore davantage la section de passage du fluide pour les faibles levées en formant des restrictions supplémentaires diminuant ainsi le débit du fluide sur les faibles levées.

La vanne de régulation de débit de fluide selon l'invention comprend les caractéristiques ci-dessous
- la soupape comporte une zone de contrôle complémentaire dont une extrémité est délimitée par la ligne de contact avec le conduit lorsque la soupape est en position de fermeture, la zone de contrôle complémentaire comportant le au moins un renflement.

La vanne de régulation peut également comprendre une ou plusieurs des caractéristiques ci-dessous, considérées individuellement ou selon toutes les combinaisons techniquement possibles:
- la zone de contrôle complémentaire comporte en regard de la zone de contrôle du conduit lorsque la soupape est en position de fermeture une surface de profil curviligne s'évasant à partir de la ligne de contact dans la direction de coulissement de la soupape de la position de fermeture vers la position extrême d'ouverture ;
- la zone de contrôle complémentaire s'étend sur au moins 1 mm selon un axe longitudinal du conduit ;
- la soupape présente une symétrie de révolution.

Selon l'invention la vanne est conformée de sorte que :
- la zone de contrôle du conduit comporte une première zone et une seconde zone espacées par une zone intermédiaire, la seconde zone comportant une surface de profil curviligne de concavité opposée par rapport à la concavité de la première zone et la zone intermédiaire comportant une surface de profil linéaire ; et
- le ou chaque renflement de la zone de contrôle complémentaire de la soupape est agencé en regard de la zone intermédiaire de la zone de contrôle du conduit lorsque la soupape est en position de fermeture.

La vanne de régulation peut également comprendre une ou plusieurs des caractéristiques ci-dessous, considérées individuellement ou selon toutes les combinaisons techniquement possibles: la vanne est conformée de sorte que :
- la zone de contrôle complémentaire de la soupape comporte une première zone complémentaire et une seconde zone complémentaire espacées par au moins deux zones intermédiaires complémentaires ;
- le ou chaque renflement de la zone de contrôle complémentaire est agencé entre deux zones intermédiaires complémentaires consécutives ; et
- la seconde zone complémentaire comporte une surface de profil curviligne de concavité opposée par rapport à la concavité de la première zone complémentaire ;
   - la ou chaque zone intermédiaire complémentaire comporte une surface de profil linéaire ;
   - les zones intermédiaires complémentaires forment une portion tronconique, de préférence forment un cylindre droit ;
   - lorsque la soupape est en position de fermeture, la première zone complémentaire de la soupape et la première zone du conduit s'étendent chacune à partir de la ligne de contact dans la direction de coulissement de la soupape de la position de fermeture vers la position extrême d'ouverture ;
   - le au moins un renflement comporte une surface de profil curviligne ;
   - le au moins un renflement comporte une surface de profil circulaire ;
   - le ou chaque renflement s'étend radialement sur une épaisseur comprise entre 0,25 mm et 0,5 mm ;
   - le au moins un renflement est configuré de sorte que, lorsque la soupape est en position de fermeture, au moins un renflement est sensiblement en contact avec la zone de contrôle du conduit ;
   - la soupape comporte deux renflements agencés chacun en regard de la zone de contrôle du conduit lorsque la soupape est en position de fermeture ;
   - les deux renflements sont configurés de sorte à être sensiblement en contact avec la zone de contrôle du conduit lorsque la soupape est en position de fermeture ;
   - au moins un renflement est agencé sur la soupape à une distance comprise entre 1,2 et 1,4 mm de la ligne de contact ;
   - le mouvement de la soupape de la position de fermeture vers la position extrême d'ouverture est dans la direction opposée à la direction d'écoulement du fluide en fonctionnement nominal ;
   - la soupape est mobile en translation dans le conduit sur une course prédéterminée entre la position de fermeture et la position extrême d'ouverture, et la zone de contrôle s'étend sur au moins un quart de la course prédéterminée entre la position de fermeture et la position extrême d'ouverture, de préférence sur au moins un tiers de la course prédéterminée, encore de préférence sur au moins la moitié de la course prédéterminée ;
   - la zone de contrôle est formée par la paroi interne du conduit et/ou d'un siège rapporté sur le conduit ;
   - la vanne est une vanne de recirculation des gaz d'échappement ;
   - la position extrême d'ouverture assure un débit maximal du fluide dans la vanne ;
   - la surface de la première zone complémentaire a un profil curviligne comportant un arc de cercle ;
   - la surface de la seconde zone complémentaire a un profil curviligne comportant un arc de cercle ;
   - le conduit de la vanne et le siège rapporté sur le conduit sont en matériaux différents ;
   - le conduit de la vanne est en aluminium ;
   - le siège rapporté sur le conduit de la vanne est en inox ;
   - le siège rapporté sur le conduit de la vanne est en aluminium ;
   - la soupape de la vanne est en acier.

D'autres caractéristiques et avantages de l'invention apparaîtront à la lecture de la description détaillée de modes de réalisation donnés à titre d'exemples non limitatifs et illustrés, accompagnée des figures suivantes :
- la figure 1 est une vue schématique partielle en coupe d'un mode de réalisation d'une vanne selon l'invention dans lequel la soupape est dans une position extrême d'ouverture ; et
- la figure 2 est une vue schématique partielle agrandie du siège de la vanne et de la soupape de la vanne de la figure 1 dans la position de fermeture.

Sur les figures, les éléments analogues sont désignés par des références identiques. En outre, les différents éléments ne sont pas nécessairement représentés à l'échelle afin de présenter une vue permettant de faciliter la compréhension de l'invention.

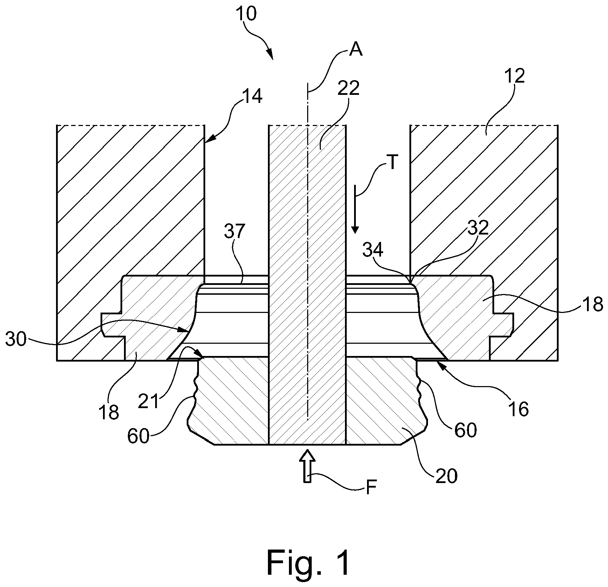

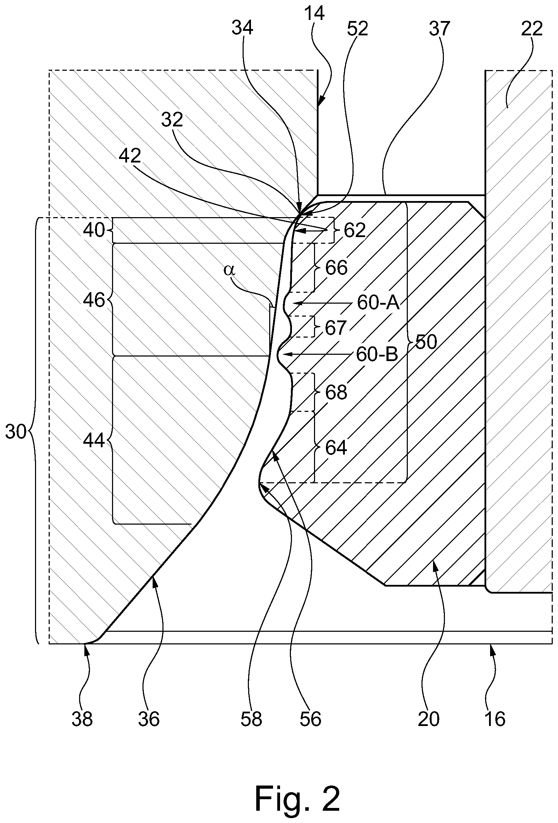

Les figures 1 et 2 illustrent un premier mode de réalisation d'une vanne de régulation de débit de fluide selon l'invention.

La vanne 10 comprend un corps 12 comprenant notamment un conduit 14 présentant une ouverture 16 permettant l'écoulement du fluide et délimitant un siège 18 pour un clapet ou soupape 20.

Par exemple, cette vanne est une vanne de recirculation des gaz d'échappement, également appelée vanne EGR. A cet effet, elle est destinée à être raccordée à une canalisation d'évacuation des gaz d'échappement.

En particulier, le conduit 14 est destiné à être raccordé à une canalisation d'arrivée du fluide, ici des gaz d'échappement, afin d'assurer l'admission des gaz d'échappement dans la vanne, selon la flèche F illustrée en figure 1.

En outre, la vanne comporte également un autre conduit (non illustré) destiné à assurer la sortie des gaz de la vanne, notamment en vue de leur recirculation. Cet autre conduit s'étend perpendiculairement au conduit 14 délimitant le siège de la soupape.

La soupape 20 de la vanne est solidaire d'une extrémité d'une tige formant un coulisseau 22 monté pour coulisser dans le conduit 14 du corps 12 entre une position de fermeture ou d'obturation (illustrée en figure 2) et une position extrême d'ouverture (illustrée sur la figure 1).

Dans ce premier mode de réalisation illustré sur les figures 1 et 2, le mouvement de la soupape illustré par la flèche T de la position de fermeture (figure 2) à la position extrême d'ouverture (figure 1) est dans la direction opposée à la direction d'écoulement du fluide en fonctionnement nominal illustré par la flèche F.

Au sens de l'invention, le fonctionnement dit nominal de la vanne correspond au fonctionnement stabilisé de la vanne, c'est-à-dire hors phénomènes transitoires dus aux effets pulsatoires dans les variations entre les pressions amont et aval du fluide. Ici, l'ouverture 16 est un orifice d'entrée du fluide dans le conduit du corps de vanne.

En d'autres termes, dans ce premier mode de réalisation, la tête de soupape 20 s'éloigne du conduit 14 du corps de vanne lorsqu'elle passe de la position de fermeture à la position extrême d'ouverture.

Dans la position de fermeture illustrée sur la figure 2, la soupape 20 est appliquée contre le siège 18 de sorte à obturer totalement l'ouverture. En d'autres termes, la soupape 20 est en appui contre le siège dans la position de fermeture, tandis que dans la position extrême d'ouverture illustrée en figure 1, la soupape 20 est écartée du siège 18. La position extrême d'ouverture correspond également à la position de levée maximale de la soupape 20 par rapport à sa position de fermeture, dans laquelle le bord périphérique 21 de la soupape 20 définit avec le siège 18 à l'aplomb de celui-ci une section maximale théorique de passage des gaz et donc un débit maximal du fluide dans la vanne.

La tige formant le coulisseau 22 est généralement reçue à coulissement dans un alésage ménagé dans une paroi du corps de vanne s'étendant en regard du siège 18 perpendiculairement à celui-ci.

Un moteur (non illustré) est fixé dans le corps 12 pour entraîner en translation le coulisseau 22 et donc la soupape 20 via un actionneur. Par exemple, le moteur a un pignon de sortie relié par un jeu d'engrenages à un pignon formé d'un secteur denté, le jeu d'engrenages étant monté sur le corps 12. Le pignon de sortie, le jeu d'engrenages et le pignon pivotent autour d'axes parallèles à la direction A de coulissement du coulisseau 22. En outre, le pignon peut être associé à un dispositif de transformation d'un mouvement de rotation du pignon en un mouvement de translation du coulisseau 22. La soupape peut également tourner sur elle-même autour de l'axe A tout en coulissant selon la direction A de coulissement du coulisseau 22 qui est sensiblement perpendiculaire au siège 18. Dans d'autres exemples de réalisation, la soupape peut avoir un mouvement de translation pure, c'est-à-dire que la soupape ne tourne pas autour de son axe lorsqu'elle coulisse en translation.

En outre, la soupape 20 et l'ouverture 16 de la vanne 10 sont avantageusement agencées de manière à ce que le débit de fluide circulant entre la soupape et l'ouverture présente une variation dont la pente augmente avec la course de la soupape par rapport à la position de fermeture sur au moins une partie d'une course prédéterminée à partir de la position de fermeture, pour une température de fluide et une différence de pressions entre l'amont et l'aval de l'ouverture données. La course prédéterminée est définie par la levée maximale ou course maximale que peut parcourir la tête de soupape pour passer de la position de fermeture à la position extrême d'ouverture.

Une telle vanne permet ainsi d'obtenir une meilleure progressivité du débit du fluide en particulier pour les faibles levées. Une telle progressivité par exemple du type exponentielle pour les faibles levées permet d'obtenir un fort niveau de précision dans cette zone de faibles levées qui est généralement fréquemment utilisée en fonctionnement.

De préférence, la forme de l'ouverture et/ou la forme de la soupape sont agencées de manière à ce que le débit de fluide circulant entre la soupape et l'ouverture présente une variation dont la pente augmente avec la course de la soupape sur au moins une partie de la course prédéterminée à partir de la position de fermeture, pour une température et une différence de pressions données.

En outre, la soupape et l'ouverture peuvent être avantageusement agencées de manière à ce que le débit de fluide circulant entre la soupape et l'ouverture présente une variation linéaire avec la course de la soupape sur au moins une partie de la course prédéterminée après la variation dont la pente augmente avec la course.

Selon l'invention, le conduit 14 comporte une zone de contrôle 30 du débit de fluide dont une extrémité 32 est délimitée par la ligne de contact 34 avec la soupape 20 lorsque celle-ci est en position de fermeture. Cette zone de contrôle 30 est davantage visible sur la figure 2 qui illustre une vue agrandie d'une coupe de la zone de contrôle du conduit et d'une partie de la tête de soupape dans la position de fermeture.

La zone de contrôle 30 du conduit 14 va maintenant être détaillée en regard de la vue agrandie illustrée sur la figure 2.

La zone de contrôle 30 comporte en regard de la soupape 20 une surface 36 de profil curviligne s'évasant à partir de la ligne de contact 34 dans la direction T de translation de la soupape quand elle passe de la position de fermeture vers la position extrême d'ouverture. Ainsi, la surface 36 de la zone de contrôle 30 ayant un profil curviligne a une base 37 étroite dirigée vers la tête de soupape 20 et s'évase à l'opposé jusqu'à un bord périphérique 38 du siège 18.

De préférence, la surface 36 de la zone de contrôle 30 est une surface de révolution de génératrice curviligne. En d'autres termes, la surface 36 a un diamètre qui s'agrandit à partir de l'extrémité 32 délimitée par la ligne de contact 34 avec la soupape en position de fermeture vers l'ouverture 16 de la vanne dans la direction T de translation de la soupape en vue de l'ouverture du conduit.

Le profil curviligne de la surface évasée de la zone de contrôle comporte avantageusement une alternance de portions concaves et de portions convexes espacées par des segments linéaires.

Par exemple, selon le mode de réalisation illustré sur les figures et en particulier sur la figure 2, la zone de contrôle 30 comporte une première zone 40 délimitée par la ligne de contact 34 avec la soupape 20 lorsque celle-ci est en position de fermeture. La première zone 40 a une surface complémentaire d'une portion 42 de la surface de la soupape 20 délimitée par la ligne de contact 34. La surface de la première zone 40 a un profil curviligne comportant un arc de cercle.

En outre, la zone de contrôle 30 comporte une seconde zone 44 comportant une surface de profil curviligne de concavité opposée par rapport à la concavité de la première zone 40.

La surface de la seconde zone 44 a un profil curviligne comportant de préférence un arc de cercle. Avantageusement, l'arc de cercle du profil de la seconde zone 44 a un rayon compris entre 2 et 8 mm, de préférence 5 mm.

La première zone 40 et la seconde zone 44 sont espacées par une zone intermédiaire 46 comportant une surface de profil linéaire. La zone intermédiaire 46 s'évase linéairement selon un angle α compris entre 5° et 15° par rapport à l'axe longitudinal A du conduit 12, de préférence 7°.

La surface 36 de la zone de contrôle 30 a pour fonction de permettre un débit aussi élevé que possible lorsque la soupape est proche de son ouverture maximale.

En outre, la forme de la surface 36 de la zone de contrôle 30 en surface de révolution de génératrice incurvée facilite la réalisation de la zone de contrôle et par conséquent du siège lorsque celle-ci est intégralement formée sur le siège rapporté sur le conduit. La forme de la génératrice en arc de cercle allie simplicité de réalisation et efficacité.

De préférence, la zone de contrôle 30 s'étend sur au moins un quart de la course prédéterminée entre la position de fermeture et la position extrême d'ouverture.

Alternativement, la zone de contrôle 30 peut s'étendre sur toute la course prédéterminée entre la position de fermeture et la position extrême d'ouverture.

Avantageusement, la zone de contrôle 30 s'étend sur au moins 1 mm selon l'axe longitudinal A du conduit 12.

Selon une variante, la première zone 40 s'étend sur au moins 5 % de l'étendue de la zone de contrôle 30.

Selon une autre variante, la seconde zone 44 s'étend sur au moins 10 % de l'étendue de la zone de contrôle 30.

La zone intermédiaire 46 entre la première zone 40 et la seconde zone 44 s'étend sur 20 % de l'étendue de la zone de contrôle 30.

Avantageusement, le débit de fluide circulant entre la soupape 20 et l'ouverture 16 présente une variation avec la course de la soupape dont la pente augmente sur au moins 10 % de la course prédéterminée à partir de la position de fermeture, et de préférence au moins 20 %.

Selon l'invention, la soupape 20 comporte une zone de contrôle complémentaire 50 dont une extrémité 52 est délimitée par la ligne de contact 34 avec le conduit 14 lorsque la soupape est en position de fermeture.

La zone de contrôle complémentaire 50 de la soupape 20 va maintenant être détaillée en regard de la vue agrandie illustrée sur la figure 2.

La zone de contrôle complémentaire 50 comporte en regard de la zone de contrôle 30 du conduit lorsque la soupape est en position de fermeture une surface 56 de profil curviligne globalement évasé à partir de la ligne de contact 34 dans la direction de coulissement de la soupape de la position de fermeture vers la position extrême d'ouverture. Par globalement évasé, on entend que la zone de contrôle complémentaire 50 s'étend entre la première extrémité 52 et une seconde extrémité 58 opposée de section transversale plus grande que celle de la première extrémité 42.

De préférence, la soupape présente une symétrie de révolution. Ainsi, la surface 56 de la zone de contrôle complémentaire 50 est une surface de révolution de génératrice curviligne. En d'autres termes, la surface 56 a un diamètre plus grand à la seconde extrémité 58 qu'à la première extrémité 52. Selon l'invention, la soupape 20 comprend au moins un renflement 60 agencé en regard de la zone de contrôle 30 du conduit 14 lorsque la soupape est en position de fermeture. Notamment, le ou les renflements 60 sont agencés dans la zone de contrôle complémentaire 50 en regard de la zone intermédiaire 46 de la zone de contrôle 30 du conduit 14 lorsque la soupape est en position de fermeture. Au sens de l'invention, on entend par renflement ou bourrelet, une portion de la soupape qui a augmenté significativement de volume.

Selon le mode de réalisation préféré illustré sur la figure 2, la soupape 20 comporte avantageusement deux renflements, notés 60-A et 60-B agencés dans la zone de contrôle complémentaire 50. Chaque renflement 60-A et 60-B est agencé en regard de la zone intermédiaire 46 de la zone de contrôle 30 du conduit 14 lorsque la soupape est en position de fermeture. Le premier renflement 60-A est le plus proche de la première extrémité 52 de la zone de contrôle complémentaire 50 délimitée par la ligne de contact 34.

De préférence, chaque renflement 60 comporte une surface de profil curviligne, de préférence une surface de profil circulaire.

Chaque renflement 60 est configuré de sorte que, lorsque la soupape 20 est en position de fermeture, au moins un renflement 60 est sensiblement en contact avec la zone de contrôle 30 du conduit 14, tout en tolérant un jeu minimum afin d'éviter tout risque de coincement de la soupape 20 dans le conduit 14.

De préférence, dans le cas où la soupape comporte deux renflements 60-A et 60-B telle qu'illustrée sur les figures, les deux renflements 60-A et 60-B sont configurés de sorte à être sensiblement en contact avec la zone de contrôle 30 du conduit 14 lorsque la soupape 20 est en position de fermeture. En d'autres termes, la pente de la droite reliant les sommets ou extrémités radiales des renflements 60-A et 60-B est égale à la pente α du profil linéaire de la surface de la zone intermédiaire 46 du conduit 14.

Avantageusement, au moins un renflement 60-A est agencé sur la soupape à une distance comprise entre 1,2 mm et 1,4 mm de la ligne de contact 34, lorsque la soupape 20 est en position de fermeture. Ainsi, le renflement 60-A est vis-à-vis de la zone 46 du conduit lorsque la soupape est en position de fermeture.

De préférence, le ou chaque renflement 60-A, 60-B s'étend radialement sur une épaisseur comprise entre 0,25 mm et 0,5 mm. L'épaisseur des renflements 60-A et 60-B est choisie dans le but de réduire au minimum le jeu avec la zone de contrôle 30 du conduit 14.

La zone de contrôle complémentaire 50 de la soupape comporte une première zone complémentaire 62 et une seconde zone complémentaire 64 espacées par au moins deux zones intermédiaires complémentaires 66, 67 et 68.

Lorsque la soupape 20 est en position de fermeture, la première zone complémentaire 62 de la soupape et la première zone 40 du conduit 14 s'étendent chacune à partir de la ligne de contact 34 dans la direction de coulissement de la soupape de la position de fermeture vers la position extrême d'ouverture. La première zone complémentaire 62 de la soupape 20 comporte notamment la portion 42 de la surface de la soupape 20 ayant une surface complémentaire de la première zone 40 du conduit 14. De préférence, la surface de la première zone complémentaire 62 a un profil curviligne comportant un arc de cercle.

La seconde zone complémentaire 64 comporte une surface de profil curviligne de concavité opposée par rapport à la concavité de la première zone complémentaire 62. De préférence, la surface de la seconde zone complémentaire a un profil curviligne comportant un arc de cercle.

Chaque renflement 60-A, 60-B de la zone de contrôle complémentaire 50 est agencé entre deux zones intermédiaires complémentaires consécutives 66, 67 et 68.

Ainsi, la zone de contrôle complémentaire 50 de la soupape selon le mode de réalisation préféré illustré sur les figures comporte successivement à partir de la ligne de contact 34 :
- la première zone complémentaire 62,
- une première zone intermédiaire complémentaire 66,
- le premier renflement 60-A,
- une seconde zone intermédiaire complémentaire 67,
- le second renflement 60-B,
- la troisième zone intermédiaire complémentaire 68, et
- la première zone complémentaire 64.

Par exemple, chaque zone intermédiaire complémentaire 66, 67 et 68 comporte une surface de profil linéaire et forme ainsi une portion tronconique, de préférence forment un cylindre droit.

De préférence, la zone de contrôle complémentaire 50 s'étend sur au moins 1 mm selon un axe longitudinal du conduit. De préférence, le premier renflement 60-A est agencé sur la soupape à une distance comprise entre 1,2 mm et 1,4 mm de la ligne de contact 34 tandis que le deuxième renflement 60-B est agencé sur la soupape à une distance comprise entre 1,9 mm et 2,1 mm de la ligne de contact 34, lorsque la soupape 20 est en position de fermeture.

En fonctionnement, lorsque la soupape passe de la position de fermeture vers la position extrême d'ouverture, le débit de fluide augmente progressivement et notamment sur des faibles levées pour une vanne comportant une zone de contrôle sur le conduit et une zone de contrôle complémentaire sur la soupape telles que décrites précédemment à l'exception des renflements. La présence des renflements 60-A, 60-B dans la zone de contrôle complémentaire sur la soupape permet encore de réduire la section efficace sur les petites levées jusqu'à obtenir encore un gain d'au moins 20% grâce aux restrictions supplémentaires induites par la présence des renflements. En effet, la présence des renflements sur la surface extérieure de la soupape permet de limiter l'augmentation de la section de passage des gaz entre la soupape et la paroi en regard. Notamment, le premier renflement 60-A assure les trois-quarts de ce gain, le reste étant dû à la présence du second renflement 60-B.

Selon le mode de réalisation illustré sur les figures, la zone de contrôle 30 est formée par la paroi interne d'un siège 18 rapporté sur le conduit 14. De préférence, le conduit 14 de la vanne et le siège 18 rapporté sur le conduit sont en matériaux différents. Notamment, le conduit 14 de la vanne par exemple en aluminium tandis que le siège 18 rapporté sur le conduit de la vanne est en inox. La soupape 20 de la vanne est en acier.

Selon d'autres modes de réalisation non représentés, le conduit de la vanne peut être en polymère thermoplastique ou en polymère thermodurcissable. De la même manière, le siège rapporté sur le conduit de la vanne peut être en polymère thermoplastique ou en polymère thermodurcissable. Ces modes de réalisation correspondent à des applications où la température des gaz est peu élevée, notamment lorsque les gaz sont refroidis en traversant un échangeur de chaleur avant de circuler dans la vanne.

Une vanne selon l'invention permet avantageusement d'obtenir une progressivité du débit du fluide en fonction de la levée de la soupape par rapport à sa position de fermeture, en particulier pour les faibles levées. En effet, le ou les renflements de la soupape permettent d'abaisser la section de passage sur les faibles levées en formant des restrictions supplémentaires diminuant ainsi le débit du fluide sur les faibles levées.

Une telle progressivité par exemple du type exponentielle pour les faibles levées permet d'obtenir un fort niveau de précision dans cette zone de faibles levées qui est généralement fréquemment utilisée en fonctionnement. Notamment, la présence des renflements sur une vanne selon l'invention permet de diminuer la section d'au moins 20 % par rapport à une vanne de l'art antérieur.

En outre, la forme de la surface de la zone de contrôle en surface de révolution de génératrice incurvée facilite la réalisation de la zone de contrôle et par conséquent du siège lorsque celle-ci est intégralement formée sur le siège rapporté sur le conduit. La forme de la génératrice en arc de cercle allie simplicité de réalisation et efficacité. Ainsi, la réalisation d'une telle surface est aisée par des moyens traditionnels d'usinage et relativement peu onéreuse. De même, la réalisation de la zone de contrôle complémentaire de la soupape est facilitée par une surface de révolution.

De plus, la vanne selon l'invention permet avantageusement de mieux contrôler la progressivité de la section de passage et par conséquent du débit de fluide, et ainsi de mieux contrôler la progressivité de la perméabilité de la vanne tout au long de son ouverture.

Bien entendu, l'invention n'est pas limitée au mode de réalisation décrit mais englobe les variantes de réalisation entrant dans le cadre de l'invention défini par les revendications.

Notamment, le mouvement de la soupape de la position de fermeture vers la position extrême d'ouverture peut être dans la même direction d'écoulement du fluide en fonctionnement nominal. Dans ce cas, l'ouverture du conduit est un orifice d'entrée du fluide dans le conduit du corps de vanne.

En outre, dans le mode de réalisation illustré et décrit, la zone de contrôle est formée par la paroi interne d'un siège rapporté sur le conduit. Néanmoins selon d'autres modes de réalisation, la zone de contrôle peut être formée par la paroi interne du conduit uniquement ou à la fois sur la paroi interne du conduit et la paroi interne d'un siège rapporté sur le conduit.

## Revendications

1. Vanne (10) de régulation de débit d'un fluide comportant :
- un conduit (14) comportant une ouverture (16) permettant un écoulement du fluide, et
- une soupape (20) mobile en translation dans le conduit (14) entre une position de fermeture et une position extrême d'ouverture,
dans laquelle :
- le conduit (14) comporte une zone de contrôle (30) du débit de fluide dont une extrémité (32) est délimitée par la ligne de contact (34) avec la soupape (20) lorsqu'elle est en position de fermeture, la zone de contrôle (30) comportant en regard de la soupape (20) une surface (36) de profil curviligne s'évasant à partir de la ligne de contact (34) dans la direction de coulissement de la soupape de la position de fermeture vers la position extrême d'ouverture, et
- la soupape (20) comporte au moins un renflement (60) agencé en regard de la zone de contrôle (30) du conduit (14) lorsque la soupape (20) est en position de fermeture,
- la soupape (20) comporte une zone de contrôle complémentaire (50) dont une extrémité (52) est délimitée par la ligne de contact (34) avec le conduit (14) lorsque la soupape (20) est en position de fermeture, la zone de contrôle complémentaire (50) comportant le au moins un renflement (60);
la vanne étant **caractérisée en ce que**
- la zone de contrôle (30) du conduit (14) comporte une première zone (40) et une seconde zone (44) espacées par une zone intermédiaire (46), la première zone (40) comportant une surface de profil curviligne, la seconde zone comportant une surface de profil curviligne de concavité opposée par rapport à la concavité de la première zone et la zone intermédiaire comportant une surface de profil linéaire ; et
- le ou chaque renflement (60) de la zone de contrôle complémentaire (50) de la soupape (20) est agencé en regard de la zone intermédiaire (46) de la zone de contrôle (30) du conduit lorsque la soupape est en position de fermeture.

2. Vanne selon la revendication 1, dans laquelle le au moins un renflement (60) comporte une surface de profil curviligne.

3. Vanne selon l'une quelconque des revendications 1 à 2 dans laquelle le au moins un renflement (60) comporte une surface de profil circulaire.

4. Vanne selon l'une quelconque des revendications 1 à 3, dans laquelle le ou chaque renflement (60) s'étend radialement sur une épaisseur comprise entre 0,25 mm et 0,5 mm.

5. Vanne selon l'une quelconque des revendications 1 à 4, dans laquelle la soupape comporte deux renflements (60-A, 60-B) agencés chacun en regard de la zone de contrôle (30) du conduit (14) lorsque la soupape est en position de fermeture.

6. Vanne selon la revendication 5, dans laquelle les deux renflements (60-A, 60-B) sont configurés de sorte à être sensiblement en contact avec la zone de contrôle (30) du conduit (14) lorsque la soupape est en position de fermeture.

7. Vanne selon l'une quelconque des revendications 1 à 6, dans laquelle le mouvement de la soupape de la position de fermeture vers la position extrême d'ouverture est dans la direction opposée à la direction d'écoulement du fluide en fonctionnement nominal.

8. Vanne selon l'une quelconque des revendications 1 à 7, dans laquelle la vanne est une vanne de recirculation des gaz d'échappement.

## Patentansprüche

1. Ventil (10) zur Regelung der Durchflussrate eines Fluids, welches aufweist:
- eine Leitung (14), die eine Öffnung (16) aufweist, die ein Fließen des Fluids ermöglicht, und
- ein Ventilelement (20), das in der Leitung (14) zwischen einer Schließposition und einer äußersten Öffnungsposition translatorisch beweglich ist,
wobei:
- die Leitung (14) einen Steuerungsbereich (30) für die Durchflussrate des Fluids aufweist, dessen eines Ende (32) von der Kontaktlinie (34) mit dem Ventilelement (20), wenn es sich in der Schließposition befindet, begrenzt wird, wobei der Steuerungsbereich (30) gegenüber dem Ventilelement (20) eine Fläche (36) mit gekrümmtem Profil aufweist, die sich von der Kontaktlinie (34) aus in der Richtung des Gleitens des Ventilelements von der Schließposition in Richtung der äußersten Öffnungsposition erweitert, und
- das Ventilelement (20) wenigstens eine Ausbauchung (60) aufweist, die gegenüber dem Steuerungsbereich (30) der Leitung (14) angeordnet ist, wenn sich das Ventilelement (20) in der Schließposition befindet,
- das Ventilelement (20) einen komplementären Steuerungsbereich (50) aufweist, dessen eines Ende (52) von der Kontaktlinie (34) mit der Leitung (14), wenn sich das Ventilelement (20) in der Schließposition befindet, begrenzt wird, wobei der komplementäre Steuerungsbereich (50) die wenigstens eine Ausbauchung (60) aufweist;
wobei das Ventil **dadurch gekennzeichnet ist, dass**
- der Steuerungsbereich (30) der Leitung (14) einen ersten Bereich (40) und einen zweiten Bereich (44) aufweist, die durch einen Zwischenbereich (46) getrennt sind, wobei der erste Bereich (40) eine Fläche mit gekrümmtem Profil aufweist, wobei der zweite Bereich eine Fläche mit gekrümmtem Profil mit einer Konkavität, die bezüglich der Konkavität des ersten Bereichs entgegengesetzt ist, aufweist, und wobei der Zwischenbereich eine Fläche mit geradlinigem Profil aufweist; und
- die oder jede Ausbauchung (60) des komplementären Steuerungsbereichs (50) des Ventilelements (20) gegenüber dem Zwischenbereich (46) des Steuerungsbereichs (30) der Leitung angeordnet ist, wenn sich das Ventilelement in der Schließposition befindet.

2. Ventil nach Anspruch 1, wobei die wenigstens eine Ausbauchung (60) eine Fläche mit gekrümmtem Profil aufweist.

3. Ventil nach einem der Ansprüche 1 bis 2, wobei die wenigstens eine Ausbauchung (60) eine Fläche mit kreisförmigem Profil aufweist.

4. Ventil nach einem der Ansprüche 1 bis 3, wobei sich die oder jede Ausbauchung (60) radial auf einer Dicke zwischen 0,25 mm und 0,5 mm erstreckt.

5. Ventil nach einem der Ansprüche 1 bis 4, wobei das Ventilelement zwei Ausbauchungen (60-A, 60-B) aufweist, die jeweils gegenüber dem Steuerungsbereich (30) der Leitung (14) angeordnet sind, wenn sich das Ventilelement in der Schließposition befindet.

6. Ventil nach Anspruch 5, wobei die zwei Ausbauchungen (60-A, 60-B) so ausgebildet sind, dass sie sich im Wesentlichen in Kontakt mit dem Steuerungsbereich (30) der Leitung (14) befinden, wenn sich das Ventilelement in der Schließposition befindet.

7. Ventil nach einem der Ansprüche 1 bis 6, wobei die Bewegung des Ventilelements von der Schließposition in Richtung der äußersten Öffnungsposition in der Richtung erfolgt, die zur Fließrichtung des Fluids im Nennbetrieb entgegengesetzt ist.

8. Ventil nach einem der Ansprüche 1 bis 7, wobei das Ventil ein Abgasrückführungsventil ist.

## Claims

1. A valve (10) for regulating the flow rate of a fluid (24), including:
- a duct (14) including an opening (16) allowing a flow of the fluid, and
- a valve member (20) that is mobile in translation in the duct (14) between a closed position and an end open position,
wherein:
- the duct (14) includes a zone (30) for controlling the fluid flow rate, one end (32) of which is delimited by the line of contact (34) with the valve member (20) when it is in the closed position, the control zone (30) including, opposite the valve member (20), a surface (36) with a curvilinear profile flaring out from the line of contact (34) in the direction in which the valve member slides from the closed position to the end open position, and
- the valve member (20) includes at least one bulge (60) arranged opposite the control zone (30) of the duct (14) when the valve member (20) is in the closed position,
the valve member (20) includes a complementary control zone (50) one end (52) of which is delimited by the line of contact (34) with the duct (14) when the valve member (20) is in the closed position, the complementary control zone (50) including the at least one bulge (60),
the valve being **characterized in that**
- the control zone (30) of the duct (14) includes a first zone (40) and a second zone (44) spaced by an intermediate zone (46), the first zone (40) including a surface of curvilinear profile, the second zone including a surface of curvilinear profile with the opposite concavity to the concavity of the first zone and the intermediate zone including a linear profile surface; and
- the or each bulge (60) of the complementary control zone (50) of the valve member (20) is arranged facing the intermediate zone (46) of the control zone (30) of the duct when the valve member is in the closed position.

2. The valve as claimed in claims 1, in which the at least one bulge (60) includes a curvilinear profile surface.

3. The valve as claimed in any one of claims 1 to 2, in which the at least one bulge (60) includes a circular profile surface.

4. The valve as claimed in any one of claims 1 to 2, in which the or each bulge (60) extends radially to a thickness between 0.25 mm and 0.5 mm inclusive.

5. The valve as claimed in any one of claims 1 to 2, in which the valve includes two bulges (60-A, 60-B) each arranged facing the control zone (30) of the duct (14) when the valve is in the closed position.

6. The valve as claimed in claim 2, in which the two bulges (60-A, 60-B) are configured so as to be substantially in contact with the control zone (30) of the duct (14) when the valve is in the closed position.

7. The valve as claimed in any one of claims 1 to 2, in which the movement of the valve from the closed position to the end open position is in the direction opposite to the direction of flow of the fluid in nominal operation.

8. The valve as claimed in any one of claims 1 to 2, in which the valve is an exhaust gas recirculation valve.
